# FASCICULE DE BREVET EUROPEEN

(11) **EP 4 179 223 B1**
(45) Date de publication et mention de la délivrance du brevet: **24.04.2024**
(21) Numéro de dépôt: 21749670.2
(22) Date de dépôt: 09.07.2021
(51) Int. Cl.: F16C 33/38, F16C 19/06

(54) **INSERT POUR PALIER DE ROULEMENT**
EINSATZ FÜR WÄLZLAGER
INSERT FOR ROLLING BEARING

(30) Priorité: 10.07.2020 FR 2007351
(43) Date de publication de la demande: 17.05.2023
(73) Titulaire: SAFRAN AIRCRAFT ENGINES, 75015 Paris (FR)
(72) Inventeur: DETERRE, Geoffray, Fernand, Jacques, 77550 MOISSY-CRAMAYEL (FR)
(74) Mandataire: Ernest Gutmann - Yves Plasseraud S.A.S.
(86) Numéro de dépôt international: PCT/FR2021/051287
(87) Numéro de publication internationale: WO 2022/008857

(56) Documents cités:
- EP-A2- 2 006 560
- JP-A- 2003 232 363
- JP-A- 2009 024 821
- US-A- 3 390 928
- US-A1- 2016 108 965

## Description

### Domaine technique de l'invention

Le présent exposé concerne le domaine des paliers de roulements, en particulier pour turbomachine.

### Etat de la technique antérieure

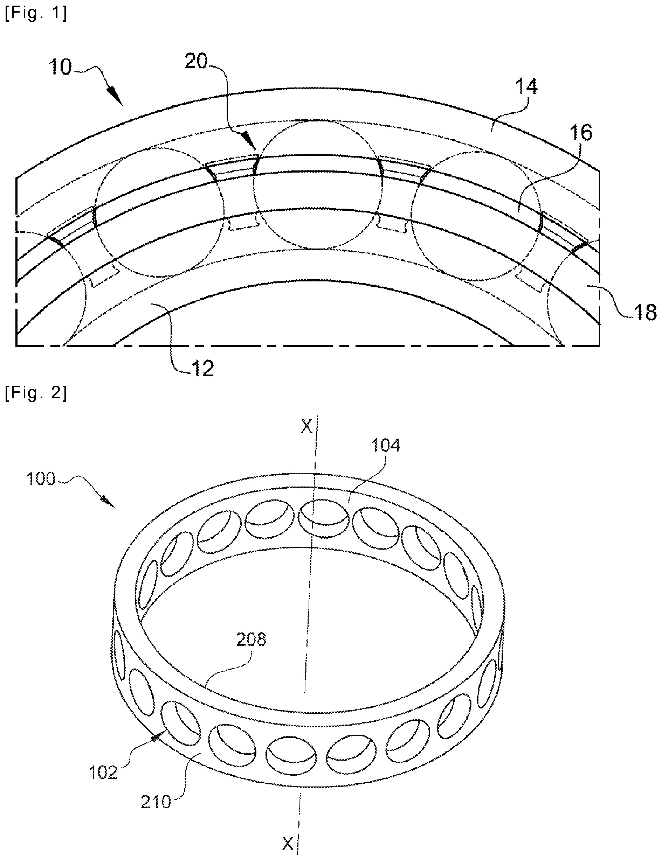

On connait les roulements pour assurer la mise en position axiale et radiale des arbres de turbomachines ou autres machines tournantes et assurer la transmission d'efforts entre des parties fixes et tournantes ou des parties tournant à des vitesses différentes. Un exemple de palier de roulement 10 est représenté sur la figure 1. Le palier de roulement 10 comprend une bague interne 12 et une bague externe 14 coaxiales selon un axe X de rotation du palier 10 et s'étendant annulairement, la bague interne 12 étant destinée à être montée autour d'un arbre. Le palier de roulement 10 comprend des éléments roulants 16 distribués circonférentiellement autour de l'axe X entre la bague interne 12 et la bague externe 14. Pour assurer une répartition circonférentielle uniforme des éléments roulants 16, le palier de roulement 10 comprend une cage annulaire 18 dans laquelle sont agencés les éléments roulants 16. La cage annulaire 18 comprend une pluralité de logements 20 recevant les éléments roulants 16. La cage annulaire 18 est en métal par exemple en acier, en aluminium, en bronze, etc., afin d'assurer une tenue mécanique élevées du palier 10. Cependant, les propriétés tribologiques de ces matériaux tel que la résistance au frottement, restent limitées, ce qui réduit leur durée de vie. Une solution pour améliorer les propriétés tribologiques de la cage annulaire 18 consiste à la réaliser dans un matériau tel que le polyétheréthercétone qui est connu pour ses propriétés tribologiques. Cependant, un tel matériau a une faible résistance mécanique par rapport à l'acier, ce qui risque l'endommagement du palier en particulier lorsqu'il est soumis à des charges importantes.

US 3 390 928 A divulgue les caractéristiques du préambule de la revendication 1.

Le présent exposé vise à proposer un palier de roulement ayant une meilleure tenue mécanique et un meilleur comportement tribologique.

Le présent exposé vise à proposer un palier de roulement avec une durée de vie amélioré adapté pour turbomachine.

### Résumé de l'invention

Pour cela, le présent exposé concerne un ensemble de palier de roulement comprenant :
- une bague interne et une bague externe coaxiales selon un axe de rotation et entre lesquelles sont disposées des éléments roulants,
- une cage annulaire de roulement métallique centrée autour de l'axe de rotation et agencée radialement entre la bague interne et la bague externe, la cage annulaire présentant une face annulaire externe en regard de la bague externe et une face annulaire interne en regard de la bague interne, et
- au moins un insert comprenant au moins une partie tubulaire engagée dans un logement de la cage annulaire et recevant un des éléments roulants, la partie tubulaire étant reliée à une extrémité radiale à un rebord agencé en butée contre la face annulaire interne ou la face annulaire externe de la cage annulaire, dans lequel
- chaque insert comprend un premier moyen d'encliquetage et la cage annulaire comprend un second moyen d'encliquetage, le premier moyen d'encliquetage coopérant avec le second moyen d'encliquetage pour maintenir la partie tubulaire dudit un insert logé dans la cage annulaire,
- et que la partie tubulaire de chaque insert comprend une portion annulaire formée à l'opposé du rebord dudit insert par rapport au premier moyen d'encliquetage, cette portion annulaire étant apte à être insérée sans déformation dans un second épaulement du logement, le second épaulement débouchant au niveau de la face interne ou externe sur laquelle est appliqué le rebord de l'insert.

L'ensemble de palier est muni d'inserts, de préférence en plastique, agencés d'une part entre les éléments roulants et les parois des logements de la cage annulaire et d'autre part radialement entre la cage annulaire et la bague interne ou la bague externe. Ainsi, lorsque l'ensemble de palier est en rotation les éléments roulants sont en contact principalement avec l'insert. De même, la cage annulaire n'est pas en contact avec la bague interne ou la bague externe lors de la rotation de l'ensemble de palier. Comme le plastique présente une meilleure résistance aux frottement, l'usure de la cage annulaire et des bagues interne et externe est limitée. Ceci améliore aussi la longévité de l'ensemble de palier. De plus, l'ensemble de palier comprend une cage annulaire qui peut être réalisée en métal, ce qui assure la résistance au choc et une tenue mécanique de l'ensemble de palier. Un tel ensemble de roulement convient donc à une utilisation dans une turbomachine.

La partie tubulaire peut avoir différentes formes. La partie tubulaire peut avoir une forme cylindrique ou une forme oblongue adaptée pour des éléments roulants du types billes à roulement. La partie tubulaire peut présenter une section rectangulaire dans un plan tangentiel à la cage annulaire soit perpendiculaire à un axe radial de la cage annulaire passant la partie tubulaire. Autrement dit, la partie tubulaire peut présenter une section rectangulaire dans un plan perpendiculaire à un axe de la partie tubulaire. L'axe de la partie tubulaire peut être colinéaire avec un axe radial de la cage annulaire lorsque la partie tubulaire est montée dans la cage annulaire.

Chaque insert peut comprendre une seule partie tubulaire, un insert étant associé à chaque logement de la cage annulaire. Au moins un insert peut comprendre plusieurs parties tubulaires, lesquelles sont reliées à un seul et même rebord. Ainsi, on peut réaliser un montage simultané de plusieurs parties tubulaires dans plusieurs logements de la cage annulaire.

Le rebord d'un insert peut être réalisé de différentes façons. Le rebord d'au moins un, en particulier chaque, insert peut présenter une forme complémentaire à la forme de la face annulaire interne ou de la face annulaire externe de la cage annulaire contre laquelle est appliqué ledit rebord. Cette forme complémentaire peut être courbée autour de l'axe de rotation. Le rebord d'au moins un, en particulier chaque, insert peut se déformer pour épouser la forme de la face annulaire interne ou de la face annulaire externe de la cage annulaire contre laquelle est appliqué ledit rebord. Le rebord d'au moins un, en particulier chaque, insert peut présenter une forme sensiblement plane.

La cage annulaire peut être en acier, acier argenté, bronze, aluminium, etc.

Au moins un, en particulier chaque, insert peut être réalisé en polyétheréthercétone, également connu sous le terme de PEEK. Un tel matériau présente une meilleure résistance aux frottements que l'acier par exemple.

L'ensemble de palier peut être dimensionné pour être agencé dans une turbomachine. Par exemple, le diamètre de la bague interne ou de la bague externe peut être supérieur à 60 mm et le diamètre d'un logement peut être supérieur à 80 mm.

La cage annulaire et au moins un insert peuvent être assemblés de différentes manières. Selon l'invention, chaque insert comprend un premier moyen d'encliquetage et la cage annulaire comprend un second moyen d'encliquetage, le premier moyen d'encliquetage coopérant avec le second moyen d'encliquetage pour maintenir la partie tubulaire dudit insert engagé dans un logement de la cage annulaire.

Le premier moyen d'encliquetage d'au moins un, en particulier de chaque, insert peut comprendre une partie annulaire en saillie de la partie tubulaire dudit insert radialement vers l'extérieur par rapport à l'axe du logement logeant ladite partie tubulaire Le second moyen d'encliquetage peut comprendre un premier épaulement radialement en regard du premier moyen d'encliquetage et plus particulièrement en regard de ladite partie annulaire en saillie. On entend par axe du logement, un axe radial de la cage annulaire passant par un centre dudit logement, par exemple pour un logement en révolution l'axe du logement peut correspondre à l'axe de révolution dudit logement. Plus généralement, il s'agit de l'axe du cylindre formant le logement.

La partie annulaire en saillie peut être sous la forme d'une collerette.

La partie tubulaire d'un insert peut présenter un diamètre externe sensiblement égal au diamètre interne du logement logeant ladite partie tubulaire d'un insert. La partie annulaire en saillie peut présenter un diamètre externe supérieur au diamètre interne du logement qui peut être sensiblement égal au diamètre interne du premier épaulement.

Le premier épaulement peut déboucher sur une face annulaire de la cage opposée à la face annulaire en contact avec le rebord de l'insert. Le débouché du premier épaulement dans le logement peut comprendre une surface radiale cylindrique avec un diamètre interne égal au diamètre externe de la partie en saillie.

Selon l'invention, la partie tubulaire de chaque insert comprend une portion annulaire formée à l'opposé du rebord dudit insert par rapport au premier moyen d'encliquetage, cette portion annulaire étant apte à être insérée sans déformation dans un second épaulement du logement, le second épaulement débouchant au niveau de la face interne ou externe sur laquelle est appliqué le rebord de l'insert.

Le second épaulement peut présenter un diamètre interne sensiblement égal au diamètre externe de la portion annulaire.

Le présent exposé concerne encore une turbomachine, telle qu'un turbopropulseur ou un turboréacteur, comprenant un ensemble de roulement tel que précité.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteurs pour des hélicoptères, des navires, des trains, ou encore comme moteurs industriels. Les turbopropulseurs (turbomoteur entrainant une hélice) sont également des turbomoteurs utilisés comme moteurs d'avion.

Sauf précision contraire, les adjectifs intérieur/interne et extérieur/externe sont utilisés en référence à une direction radiale de sorte que la partie intérieure/interne (i.e. radialement intérieure) d'un élément est plus proche de l'axe de l'élément que la partie extérieure/externe (i.e. radialement extérieure) du même élément.

### Brève description des figures

[Fig. 1] la figure 1, déjà décrite, représente un palier de roulement connu de l'état de la technique suivant une vue de côté.
[Fig. 2] la figure 2 représente une cage annulaire de palier de roulement selon une vue en perspective équipée d'un premier exemple d'insert.
[Fig. 3] la figure 3 représente le premier exemple d'insert pour une cage annulaire.
[Fig. 4] la figure 4 représente une vue partielle en perspective de la cage annulaire de la figure 2.
[Fig. 5] la figure 5 représente une vue partielle en perspective d'une cage annulaire équipée d'un deuxième exemple d'insert.
[Fig. 6] la figure 6 représente une coupe axiale d'une cage annulaire équipée du deuxième exemple d'insert.
[Fig. 7] la figure 7 représente une coupe axiale d'une cage annulaire équipée d'un troisième exemple d'insert.

### Description détaillée de l'invention

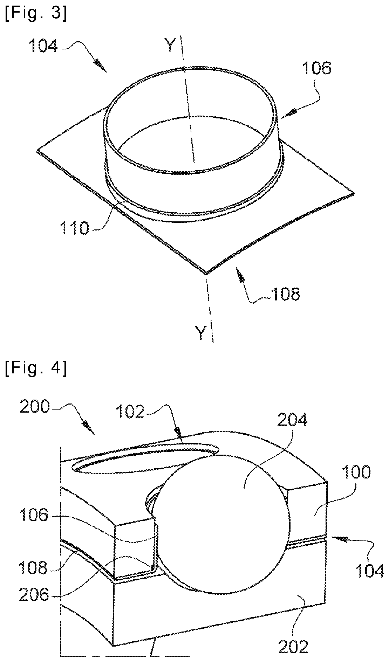

En référence aux figures 2 à 4, la cage annulaire 100 est destinée à être intégrée dans un palier de roulement par exemple le palier de roulement 10 de la figure 1 à la place de la cage annulaire 18 ou un palier 200 de la figure 4.

La cage annulaire 100 comprend une pluralité de logements 102 aptes à recevoir des éléments roulants 204. Les logements 102 sont répartis circonférentiellement autour d'un axe de rotation X de la cage annulaire 100. Par exemple, les logements 102 peuvent présenter une forme cylindrique.

La cage annulaire 100 est métallique par exemple fabriquée en acier.

La cage annulaire 100 présente une face annulaire interne 208 tournées vers l'axe de rotation X et configurée pour être en regard d'une bague interne 202 du palier 200 et une face annuaire externe 210 opposée à la face annulaire interne 208 et configurée pour être en regard d'une bague externe, non représentée sur les figures, du palier 200.

Chaque logement 102 est associé à un insert 104 en matière plastique, par exemple en polyétheréthercétone. L'insert 104 comprend un partie tubulaire 106 ayant un axe de révolution Y. Par exemple, la partie tubulaire peut être cylindrique. La partie tubulaire 106 est dimensionnée pour être agencée dans un logement 102. Par exemple, le diamètre externe de la partie tubulaire 106 peut être égal ou sensiblement supérieur au diamètre interne du logement 102.

L'insert 104 comprend en outre un rebord 108 entourant la partie tubulaire 106 et reliée à cette dernière au niveau d'une jonction annulaire 110 qui vient en butée contre une extrémité 206 du logement 102. Le rebord 108 présente une surface une forme complémentaire à la forme de la face annulaire interne 208 de la cage annulaire 100.

Bien entendu, le rebord 108 de l'insert 104 peut avoir une forme complémentaire à la forme de la face annulaire externe 210 dans le cas où l'insert 104 est agencé entre la cage annulaire 100 et la bague externe du palier 200.

L'élément roulant 204 est agencé dans la partie tubulaire 106 de sorte que l'élément roulant 204 ne subit pas de frottements avec la cage annulaire 100. Comme l'insert plastique présente une meilleure résistance au frottement, la durée de vie du palier 200 est améliorée. En variante, l'insert 104 peut comprendre une pluralité de parties tubulaires 106 réparties sur un unique rebord 108 de sorte que l'insert 104 est configuré pour être agencé dans une pluralité de logements 102.

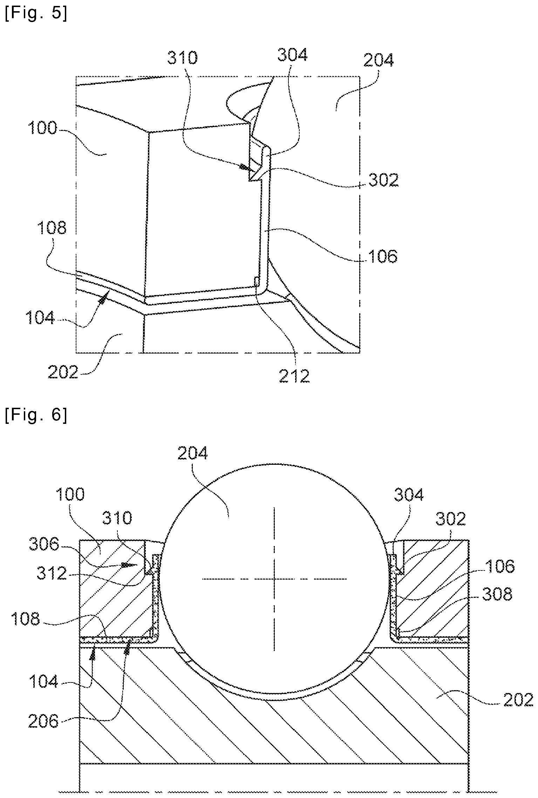

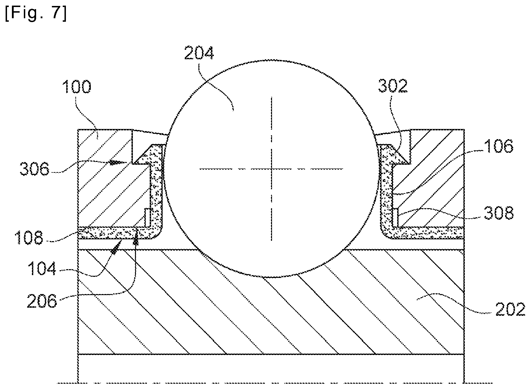

En référence aux figures 5 à 7, l'insert 104 comprend une collerette 302 d'encliquetage coopérant avec un premier épaulement 306 prévu dans le logement 102 pour bloquer radialement l'insert 104 dans le logement 102. La collerette 302 s'étend en saillie depuis la face externe de la partie tubulaire 106 radialement vers l'extérieur depuis l'axe Y de la partie tubulaire 106. La collerette 302 peut présenter un diamètre supérieur au diamètre interne du logement 102 et égal au diamètre interne du premier épaulement 306. La partie tubulaire 106 est donc insérée dans le logement 102 par déformation élastique vers son axe Y. Lorsque la collerette 302 atteint l'épaulement 306 la partie tubulaire 106 reprend sa forme initiale, la collerette 302 se trouvant ainsi en butée contre l'épaulement 306 ce qui bloque le déplacement de l'insert selon l'axe Y de la partie tubulaire.

La variante de l'insert montrée à la figure 6, comprend des moyens pour centrer la partie annulaire 106 en vue de son insertion dans le logement 102.

A cet effet, un second épaulement 308 est prévu dans le logement 102 du côté de son extrémité 206.

La partie tubulaire 106 comprend aussi une portion annulaire 304 présentant un diamètre externe sensiblement égal au diamètre interne du second épaulement 308. La portion annulaire 304 est agencée adjacente à la collerette 302 du côté d'une extrémité de la partie tubulaire 106 opposée à au rebord 108 par rapport à la collerette 302. La collerette 302 présente en outre une première surface 310 inclinée par rapport à l'axe Y de la partie tubulaire en direction du rebord 108 et une deuxième surface 312 perpendiculaire à l'axe Y. Ainsi, pour monter l'insert 104 dans le logement 102, la portion annulaire 304 est positionnée dans le second épaulement 308 ce qui permet le centrage de la partie tubulaire 106 dans le logement 102. Un effort sur l'insert 104 suivant l'axe Y de la partie tubulaire 106 engendre une déformation de la partie tubulaire 106 par glissement de la première surface 310 dans l'épaulement 308. Le montage de l'insert 104 dans le logement 102 est ainsi facilité.

Le premier épaulement 306 débouche sur une face annulaire de la cage opposée à la face annulaire en contact avec le rebord 108 de l'insert 104, soit opposée à l'extrémité 206. Le débouché du premier épaulement dans le logement 102 comprend une surface radiale cylindrique présentant un diamètre interne égal au diamètre externe de la collerette 302. Cet agencement permet de démonter plus simplement l'insert 104. En effet, il permet un accès direct aux moyens d'encliquetage depuis le débouché de l'épaulement 306. Il suffit de retirer la bague externe et l'élément roulant pour désengager l'insert 104.

## Revendications

1. Ensemble (200) de palier de roulement comprenant :
- une bague interne (202) et une bague externe coaxiales selon un axe de rotation et entre lesquelles sont disposées des éléments roulants (204),
- une cage annulaire (100) de roulement métallique centrée autour de l'axe de rotation et agencée radialement entre la bague interne (202) et la bague externe, la cage annulaire (100) présentant une face annulaire externe (210) en regard de la bague externe et une face annulaire interne (208) en regard de la bague interne (202), et
- au moins un insert (104) comprenant au moins une partie tubulaire (106) engagée dans un logement (102) de la cage annulaire (100) et recevant un des éléments roulants (204), la partie tubulaire (106) étant reliée à une extrémité radiale (110) à un rebord (108) agencé en butée contre la face annulaire interne (208) ou la face annulaire externe de la cage annulaire (100),
**caractérisé en ce que**
chaque insert (104) comprend un premier moyen d'encliquetage et la cage annulaire (100) comprend un second moyen d'encliquetage, le premier moyen d'encliquetage coopérant avec le second moyen d'encliquetage pour maintenir la partie tubulaire (106) dudit un insert logé dans la cage annulaire (100), et
dans lequel la partie tubulaire (106) de chaque insert (104) comprend une portion annulaire (304) formée à l'opposé du rebord (108) dudit insert (104) par rapport au premier moyen d'encliquetage, cette portion annulaire (304) étant apte à être insérée sans déformation dans un second épaulement (308) du logement (102), le second épaulement débouchant au niveau de la face interne (202) ou externe sur laquelle est appliqué le rebord (108) de l'insert (104).

2. Ensemble (200) selon la revendication 1, dans lequel chaque partie tubulaire (106) a une forme cylindrique.

3. Ensemble (200) selon la revendication 1 ou 2, dans lequel ledit au moins un insert (104) comprend une seule partie tubulaire (106), et dans lequel un insert (104) est associé à chaque logement (102) de la cage annulaire (100).

4. Ensemble (200) selon l'une des revendications 1 à 3, dans lequel le rebord (108) d'au moins un insert (104) présente une forme complémentaire à la forme de la face annulaire interne (202) ou de la face annulaire externe de la cage annulaire (100) contre laquelle est appliqué ledit rebord (108).

5. Ensemble (200) selon l'une des revendications 1 à 4, dans lequel l'insert (104) est en polyétheréthercétone.

6. Ensemble (200) selon l'une des revendications précédentes, dans lequel le premier moyen d'encliquetage de chaque insert comprend une partie annulaire en saillie (302) de la partie tubulaire (106) dudit insert (104) radialement vers l'extérieur par rapport à l'axe du logement comprenant ladite partie tubulaire (106), et le second moyen d'encliquetage comprend un premier épaulement (306) radialement en regard de ladite partie annulaire en saillie (302).

7. Ensemble (200) selon l'une des revendications précédentes, dans lequel le second épaulement (308) présente un diamètre interne sensiblement égal au diamètre externe de la portion annulaire (304).

8. Turbomachine, telle qu'un turbopropulseur ou un turboréacteur, comprenant un ensemble (200) selon l'une des revendications 1 à 7.

## Patentansprüche

1. Wälzlageranordnung (200), enthaltend:
- einen Innenring (202) und einem Außenring, die entlang einer Drehachse koaxial verlaufen und zwischen denen Wälzkörper (204) angeordnet sind,
- einen ringförmigen metallischen Wälzlagerkäfig (100), der um die Drehachse zentriert und radial zwischen dem Innenring (202) und dem Außenring angeordnet ist, wobei der ringförmige Käfig (100) eine dem Außenring gegenüberliegende äußere Ringfläche (210) und eine dem Innenring (202) gegenüberliegende innere Ringfläche (208) aufweist, und
- zumindest einen Einsatz (104), der zumindest ein rohrförmiges Teil (106) aufweist, das in eine Aufnahme (102) des ringförmigen Käfigs (100) eingreift und eines der Wälzkörper (204) aufnimmt, wobei das rohrförmige Teil (106) an einem radialen Ende (110) mit einem Flansch (108) verbunden ist, der in Anlage an der inneren Ringfläche (208) oder der äußeren Ringfläche des ringförmigen Käfigs (100) angeordnet ist,
**dadurch gekennzeichnet, dass** der Einsatz (104) jeweils ein erstes Einrastmittel aufweist und der ringförmige Käfig (100) ein zweites Einrastmittel aufweist, wobei das erste Einrastmittel mit dem zweiten Einrastmittel zusammenwirkt, um das rohrförmige Teil (106) des einen Einsatzes in dem ringförmigen Käfig (100) aufgenommen zu halten, und
wobei das rohrförmige Teil (106) des Einsatzes (104) jeweils einen ringförmigen Abschnitt (304) aufweist, der in Bezug auf das erste Einrastmittel dem Flansch (108) des Einsatzes (104) entgegengesetzt ausgebildet ist, wobei dieser ringförmige Abschnitt (304) dazu geeignet ist, verformungsfrei in einen zweiten Absatz (308) der Aufnahme (102) eingeführt zu werden, wobei der zweite Absatz in den Bereich der Innenseite (202) oder der Außenseite mündet, an der der Flansch (108) des Einsatzes (104) anliegt.

2. Anordnung (200) nach Anspruch 1,
wobei das rohrförmige Teil (106) jeweils eine zylindrische Form aufweist.

3. Anordnung (200) nach Anspruch 1 oder 2,
wobei der zumindest eine Einsatz (104) ein einzelnes rohrförmiges Teil (106) aufweist, und wobei der Aufnahme (102) des ringförmigen Käfigs (100) jeweils ein Einsatz (104) zugeordnet ist.

4. Anordnung (200) nach einem der Ansprüche 1 bis 3,
wobei der Flansch (108) zumindest eines Einsatzes (104) eine Form aufweist, die komplementär zur Form der inneren Ringfläche (202) oder der äußeren Ringfläche des ringförmigen Käfigs (100) ausgebildet ist, an die der Flansch (108) anliegt.

5. Anordnung (200) nach einem der Ansprüche 1 bis 4,
wobei der Einsatz (104) aus Polyetheretherketon besteht.

6. Anordnung (200) nach einem der vorhergehenden Ansprüche,
wobei das erste Einrastmittel des Einsatzes jeweils einen ringförmigen Vorsprung (302) aufweist, der von dem rohrförmigen Teil (106) des Einsatzes (104) radial nach außen in Bezug auf die Achse der das rohrförmige Teil (106) enthaltenden Aufnahme absteht, und wobei das zweite Einrastmittel einen ersten Absatz (306) aufweist, der dem ringförmigen Vorsprung (302) radial gegenüberliegt.

7. Anordnung (200) nach einem der vorhergehenden Ansprüche,
wobei der zweite Absatz (308) einen Innendurchmesser aufweist, der im Wesentlichen gleich dem Außendurchmesser des ringförmigen Abschnitts (304) ist.

8. Turbotriebwerk, wie etwa Turboprop- oder Turbostrahltriebwerk, mit einer Anordnung (200) nach einem der Ansprüche 1 bis 7.

## Claims

1. A rolling bearing assembly (200) comprising:
- an inner ring (202) and an outer ring that are coaxial about an axis of rotation and between which rolling elements (204) are arranged,
- an annular metal rolling bearing cage (100) centred about the axis of rotation and arranged radially between the inner ring (202) and the outer ring, the annular cage (100) having an outer annular face (210) facing the outer ring and an inner annular face (208) facing the inner ring (202), and
- at least one insert (104) comprising at least one tubular portion (106) engaged in a recess (102) of the annular cage (100) and receiving one of the rolling elements (204), the tubular portion (106) being connected at one radial end (110) to a rim (108) arranged in abutment against the inner annular face (208) or the outer annular face of the annular cage (100),
**characterized in that** each insert (104) comprises a first latching means and the annular cage (100) comprises a second latching means, the first latching means cooperating with the second latching means in order to hold the tubular portion (106) of said insert housed in the annular cage (100), and
wherein the tubular portion (106) of each insert (104) comprises an annular portion (304) formed opposite the rim (108) of said insert (104) with respect to the first latching means, this annular portion (304) being able to be inserted without deformation into a second shoulder (308) of the recess (102), the second shoulder opening onto the inner (202) or outer face on which the rim (108) of the insert (104) is applied.

2. The assembly (200) according to claim 1, wherein each tubular portion (106) is cylindrical.

3. The assembly (200) according to claim 1 or 2, wherein said at least one insert (104) comprises a single tubular portion (106), and wherein an insert (104) is associated with each recess (102) of the annular cage (100).

4. The assembly (200) according to one of claims 1 to 3, wherein the rim (108) of at least one insert (104) has a shape that is complementary to the shape of the inner annular face (202) or outer annular face of the annular cage (100) against which said rim (108) is applied.

5. The assembly (200) according to one of claims 1 to 4, wherein the insert (104) is made of polyether ether ketone.

6. The assembly (200) according to one of the preceding claims, wherein the first latching means of each insert comprises an annular portion (302) projecting radially from the tubular portion (106) of said insert (104) towards the outside with respect to the axis of the recess comprising said tubular portion (106), and the second latching means comprises a first shoulder (306) radially facing said projecting annular portion (302).

7. The assembly (200) according to one of the preceding claims, wherein the second shoulder (308) has an inner diameter substantially equal to the outer diameter of the annular portion (304).

8. A turbomachine, such as a turboprop engine or a turbojet engine, comprising an assembly (200) according to one of claims 1 to 7.
